# EUROPÄISCHE PATENTSCHRIFT

(11) **EP 3 337 738 B1**
(45) Veröffentlichungstag und Bekanntmachung des Hinweises auf die Patenterteilung: **19.02.2020**
(21) Anmeldenummer: 16758079.4
(22) Anmeldetag: 17.08.2016
(51) Int. Cl.: B65G 1/137

(54) **KOMMISSIONIERPLATZ ZUM KOMMISSIONIEREN VON ARTIKELN IN AUFTRAGSBEHÄLTER UND FÖRDERTASCHEN ZUR AUFTRAGS- UND BATCHKOMMISSIONIERUNG**
PICKING STATION FOR PICKING ARTICLES INTO ORDER CONTAINERS AND CONVEYING POCKETS FOR ORDER PICKING AND BATCH PICKING
POSTE DE PRÉPARATION DE MARCHANDISES POUR L'EXPÉDITION SERVANT À PRÉPARER DES ARTICLES DANS DES CONTENANTS DE COMMANDE ET DES POCHES DE MANUTENTION POUR LA PRÉPARATION DE COMMANDES ET DE LOTS

(30) Priorität: 19.08.2015 AT 2462015 U
(43) Veröffentlichungstag der Anmeldung: 27.06.2018
(73) Patentinhaber: Knapp AG, 8075 Hart bei Graz (AT)
(72) Erfinder: MATHI, Franz, 8200 Gleisdorf (AT); JOHAIM, Thomas, 8020 Graz (AT); STOCK, Peter, Atlanta, GA 30309 (US)
(74) Vertreter: Röggla, Harald
(86) Internationale Anmeldenummer: PCT/AT2016/060029
(87) Internationale Veröffentlichungsnummer: WO 2017/027896

(56) Entgegenhaltungen:
- EP-A1- 2 098 464
- EP-A1- 2 607 271
- WO-A2-2011/120067
- DE-A1-102006 057 266
- DE-A1-102008 061 685
- DE-U1-202012 100 535
- JP-A- 2001 253 515
- US-A1- 2014 244 026

## Beschreibung

Die Erfindung betrifft einen Kommissionierplatz zum Kommissionieren von Artikeln aus Lagerbehältern in Auftragsbehälter nach dem Ware-zu-Person-Prinzip mit einer Lagerbehälterfördertechnik zum Transport von Artikeln enthaltenden Lagerbehältern, insbesondere Kisten aus einem Lagerregal in zumindest zwei in einer Anordnungsreihe angeordnete Lagerbehälterbuchten des Kommissionierplatzes und mit einem entlang der Anordnungsreihe angeordneten Kommissionierbereich für eine Kommissionierperson oder einen Kommissionierroboter und mit einer in einer weiteren Anordnungsreihe angeordneten ersten Auftragsbehälterfördertechnik zum Transport von ersten Auftragsbehältern zur Aufnahme von aus den Lagerbehältern entnommenen Artikeln.

Das Dokument DE 10 2011 116 081 B3 offenbart einen solchen Kommissionierplatz, bei dem eine Lagerbehälterfördertechnik Lagerbehälter in den Arbeitsbereich einer Kommissionierperson transportiert, worauf die von einer Steuereinrichtung angegebene Anzahl an Artikeln von der Kommissionierperson aus dem Lagerbehälter entnommen werden. Die Auftragsbehälterfördertechnik ist durch eine Hängefördertechnik gebildet und transportiert Fördertaschen an, worauf die Kommissionierperson die entnommenen Artikel in die von der Steuereinrichtung angegebenen Fördertaschen legt. Hierbei wird eine Batchkommissionierung durchgeführt, bei der Artikel mehrerer Aufträge in eine Fördertasche gelegt werden. In einem anschließenden Puffer- und Sortierbereich werden die Fördertaschen zwischengespeichert und/oder in die richtige Reihenfolge gebracht, um die Artikel in einer anschließenden Packstation in je einen Auftragsbehälter je Auftrag zu packen. Die Batchkommissionierung hat den Vorteil, dass die Lagerbehälterfördertechnik entlastet wird, da der Lagerbehälter einer bestimmten Art eines Artikels nicht jedes Mal aus- und nach der Kommissionierung wieder eingelagert werden muss, sondern gleich mehrere Artikel dieser Art für mehrere Aufträge entnommen und als "Batch" in eine Fördertasche kommissioniert werden können.

Für Aufträge mit unterschiedlichen Anforderungen (z.B. Sequenzieranforderungen, Artikelsortiment, Sortierkriterien, Auftragsstruktur etc.) kann sowohl eine einstufige als auch eine zweistufige Auftragskommissionierung vorteilhafter sein. Der bekannte Kommissionierplatz weist den Nachteil auf, dass ausschließlich eine Batchkommissionierung in Fördertaschen möglich ist.

Das Dokument DE 10 2010 010 305 B4 offenbart einen Kommissionierplatz, bei dem die Kommissionierperson vor einer Vielzahl an durch Kisten gebildeten Lagerbehältern und Auftragsbehältern steht, die ähnlich einem Verkaufsregal in einem Geschäft angeordnet sind. Eine Lagerbehälterfördertechnik transportiert Lagerbehälter zu dem Kommissionierplatz und platziert jene, in denen schnell drehende Artikel enthalten sind, an besonders leicht zugängliche Positionen in der ersten Reihe und jene, in denen langsam drehende Artikel enthalten sind, an schwieriger zugängliche Positionen in hintere Reihen des Kommissionierplatzes. Eine Auftragsbehälterfördertechnik transportiert die Auftragsbehälter in die erste Reihe, um ein leichtes Ablegen der aus den Lagerbehältern entnommenen Artikel zu ermöglichen. In dem Dokument DE 10 2010010 305 B4 ist erwähnt, dass der Kommissionierplatz auch zur Batchkommissionierung geeignet wäre, bei der wohl Artikel mehrerer Aufträge in eine Kiste gelegt werden würden.

Bei diesem bekannten Kommissionierplatz hat sich als Nachteil ergeben, dass die Lagerbehälter langsam drehender Artikel von der Kommissionierperson ergonomisch schlecht erreichbar sind und, dass eine Kommissionierung in Fördertaschen nicht möglich ist.

Weitere Kommissionierplätze zum Kommissionieren von Artikeln aus Lagerbehältern in Auftragsbehälter nach dem Ware-zu-Person-Prinzip sind auch aus den Dokumenten WO 2011/120067 A2 und US 2014/0244026 A1 bekannt. Aus dem Dokument WO 2011/120067 A2 ist ein Kommissionierplatz nach dem Oberbegriff des Anspruchs 1 bekannt.

Der Erfindung liegt die Aufgabe zugrunde einen Kommissionierplatz zu schaffen, an dem flexibel zwischen einstufiger und zweistufiger Kommissionierung in unterschiedliche Arten von Auftragsbehältern gewechselt werden kann. Erfindungsgemäß wird diese Aufgabestellung durch den Gegenstand des Anspruchs 1 gelöst.

Hierdurch ist der Vorteil erhalten, dass in einer ergonomisch gut zugänglichen Anordnung sowohl in, in der Anordnungsreihe angeordnete erste Auftragsbehälter und in, in der weiteren Anordnungsreihe angeordnete zweite Auftragsbehälter kommissioniert werden kann. Der Begriff Auftragsbehälter ist hierbei insbesondere im Bezug auf die ersten Auftragsbehälter weit auszulegen und umfasst nicht nur Kisten und Fördertaschen, sondern auch einen für einen Auftrag auf der Auftragsbehälterfördertechnik reservierten Bereich, wie diese von der Zentralbandkommissionierung bekannt ist, oder ein Sorterband mit Kippschalen. Je nach Ausgestaltung der ersten und zweiten Auftragsbehälter und der zugehörigen Auftragsbehälterfördertechniken ist durch den Kommissionierplatz eine große Flexibilität bezüglich der Art der Kommissionierung gegeben.

Als erste Alternative, ist die erste Auftragsbehälterfördertechnik in der weiteren Anordnungsreihe durch eine Hängefördertechnik gebildet. Hierdurch ist eine zweistufige Kommissionierung beziehungsweise Batchkommissionierung in Fördertaschen an dem Kommissionierplatz ermöglicht. An demselben Kommissionierplatz kann aber gleichzeitig oder auch zeitlich versetzt aus den Lagerbehältern in die unmittelbar neben den Lagerbehältern in der Anordnungsreihe angeordneten zweiten Auftragsbehältern, die durch Kisten gebildet sind, eine einstufige Kommissionierung durchgeführt werden. Die gleichzeitige Kommissionierung von "e-Commerce Orders" und von "Shop Orders" an einem Kommissionierplatz bringt den Vorteil, dass für die Kommissionierung in die Fördertaschen ein hoher Batchfaktor verwendet werden kann.

Als zweite Alternative, ist die erste Auftragsbehälterfördertechnik durch ein Sorterband mit Kippschaltern gebildet, wobei die Kommissionierperson die zu kommissionierenden Artikel in einen Ablagebereich legt, von dem die Artikel in die Kippschalen auf dem Sorterband rutschen. Von einer Steuereinrichtung des Kommissionierplatzes gesteuert werden die Kippschalen zeitgerecht gekippt, damit der darauf abgelegte Artikel in einen Auftragsbehälter rutscht. Hierdurch ist eine noch größere Flexibilität in der Art der Kommissionierung gewährleistet.

Vorteilhaft ist weiters je nach gewählter erster und zweiter Auftragsbehälterfördertechnik und je nach gewählten ersten und zweiten Auftragsbehältern auch eine Festlegung durch die Steuereinrichtung des Kommissionierplatzes durchzuführen, mit welcher der Auftragsbehälterfördertechniken eine Auftragskommissionierung und gegebenenfalls auch eine Batchkommissionierung durchgeführt wird. So könnte beispielsweise festgelegt werden, dass an dem Kommissionierplatz in die Fördertaschen der ersten Auftragsbehälterfördertechnik ausschließlich "Batches" kommissioniert werden, wobei in die Kisten der zweiten Auftragsbehälterfördertechnik sowohl einzelne Aufträge als auch "Batches" kommissioniert werden.

Weitere vorteilhafte Ausgestaltungen des erfindungsgemäßen Kommissionierplatzes werden im Folgenden anhand der Figuren näher erläutert.
Figur 1 zeigt einen Kommissionierplatz gemäß einem ersten Ausführungsbeispiel der Erfindung mit einer Hängefördertechnik als erste Auftragsbehälterfördertechnik in einer Schrägansicht.
Figur 2 zeigt den Kommissionierplatz gemäß Figur 1 in einer Schnittdarstellung von der Seite.
Figur 3 zeigt einen Kommissionierplatz gemäß einem zweiten Ausführungsbeispiel der Erfindung mit einem Sorterband mit Kippschalen als erste Auftragsbehälterfördertechnik in einer Schrägansicht.

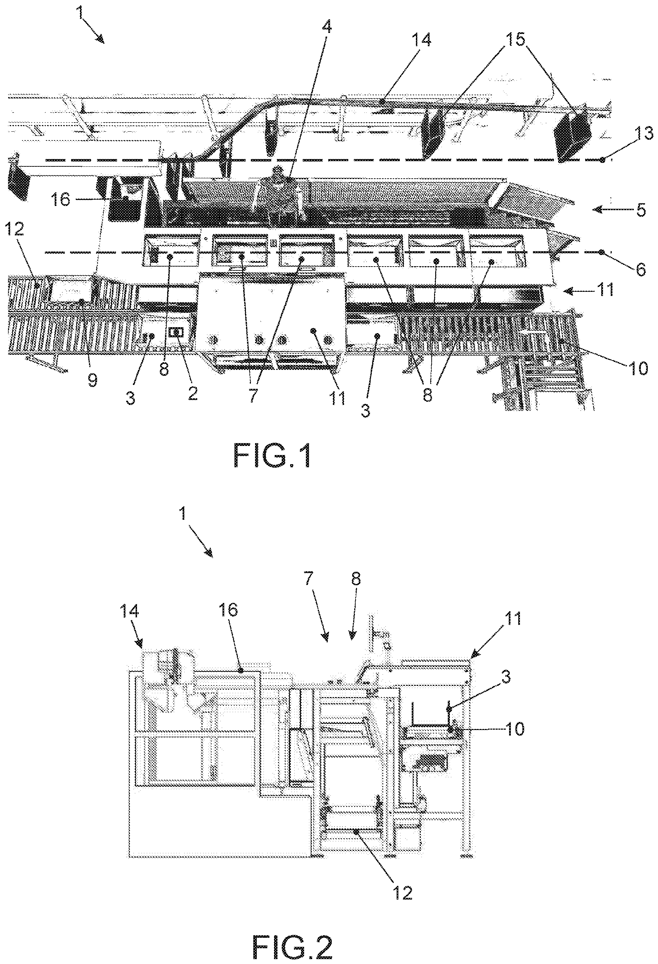

Figur 1 zeigt einen Kommissionierplatz 1 zum Kommissionieren von Artikeln 2 aus durch Kisten gebildeten Lagerbehältern 3 in Auftragsbehälter nach dem Ware-zu-Person-Prinzip. Eine Kommissionierperson 4 kann sich in einem Kommissionierbereich 5 frei bewegen, der durch einen Gang gebildet und durch Treppen erreichbar leicht vom Boden abgehoben ist. Parallel zu dem Gang befindet sich eine Anordnungsreihe 6, in der zwei Lagerbehälterbuchten 7, zur Aufnahme von Lagerbehältern 3, und vier Auftragsbehälterbuchten 8, zur Aufnahme von durch Kisten gebildeten zweiten Auftragsbehältern 9 vorgesehen sind.

Der Kommissionierplatz 1 ist in einem nicht näher dargestellten Kommissioniersystem vorgesehen, das ein Artikellager zum Lagern der in den Lagerbehältern 3 vorgesehenen Artikeln 2 aufweist. Gesteuert von einer Steuerungseinrichtung werden Lagerbehälter 3 mit zum Kommissionieren benötigten Artikeln 2 durch eine Lagerbehälterfördertechnik 10 aus dem Artikellager zu dem Kommissionierplatz 1 transportiert. Die Lagerbehälterfördertechnik 10 ist gemäß diesem Ausführungsbeispiel durch einen Rollenförderer gebildet, könnte bei einem Artikellager mit hängend gelagerten Artikeln wie Kleidungsstücken aber auch durch eine Hängefördertechnik gebildet sein. Die Lagerbehälterfördertechnik 10 transportiert die Lagerbehälter 3 in Manipulationsmittel 11 des Kommissionierplatzes 1, der in Figur 2 in einer Schnittdarstellung von der Seite dargestellt ist. Die Manipulationsmittel 11 transportieren den Lagerbehälter 3 in Richtung der Kommissionierperson 4 in eine der Lagerbehälterbuchten 7, um der Kommissionierperson 4 ein ergonomisches Entnehmen des zu kommissionierenden Artikels 2 zu ermöglichen. Nach dem Kommissionieren transportieren die Manipulationsmittel 11 den Lagerbehälter 3 wieder aus der Lagerbehälterbucht 7 und die Lagerbehälterfördertechnik 10 transportiert den Lagerbehälter 3 wieder in das Artikellager.

Der Kommissionierplatz 1 weist weiters eine durch einen Rollenförderer gebildete zweite Auftragsbehälterfördertechnik 12 auf, die zum Transport von durch Kisten gebildeten zweiten Auftragsbehältern 9 ausgebildet ist. Ein einem Auftrag oder mehreren Aufträgen zugeordneter zweiter Auftragsbehälter 9 wird von der zweiten Auftragsbehälterfördertechnik 12 in die Manipulationsmittel 11 transportiert und von den Manipulationsmittel 11 unter eine der Auftragsbehälterbuchten 8 geschoben und von einer Behälterhebevorrichtung der Manipulationsmittel 11 in die Arbeitshöhe der Kommissionierperson 4 gehoben. Hierdurch ist ein ergonomisches Ablegen des zu kommissionierenden Artikels 2 in den zweiten Auftragsbehältern 9 ermöglicht.

Wie anhand der Figur 2 ersichtlich ist die Lagerbehälterfördertechnik 10 in einer Ebene über der zweiten Auftragsbehälterfördertechnik 12 angeordnet. Hierdurch ist der Vorteil erhalten, dass der Kommissionierplatz 1 besonders platzsparend realisiert werden kann. Hierzu wäre es auch möglich die Lagerbehälterfördertechnik 10 in einer Ebene unter der zweiten Auftragsbehälterfördertechnik 12 anzuordnen.

Der Kommissionierplatz 1 weist nunmehr eine entlang des Kommissionierbereichs 5 gegenüber der Anordnungsreihe 6 in einer weiteren Anordnungsreihe 13 angeordnete erste Auftragsbehälterfördertechnik zum Transport von ersten Auftragsbehältern zur Aufnahme von aus den Lagerbehältern 3 entnommenen Artikeln 2 auf. Die erste Auftragsbehälterfördertechnik ist gemäß dem ersten Ausführungsbeispiel der Erfindung durch eine Hängefördertechnik 14 gebildet, mit der Fördertaschen 15 als erste Auftragsbehälter transportiert werden. Hierdurch ist der Vorteil erhalten, dass aus den Lagerbehältern 3 entnommene Artikel 2 sowohl in eine Fördertasche 15 als auch in einen durch eine Kiste gebildeten zweiten Auftragsbehälter 9 kommissioniert werden können.

Der Kommissionierplatz 1 weist weiters einen Ablagebereich 16 als Abschluss des Kommissionierbereichs 5 zwischen der Anordnungsreihe 6 und der weiteren Anordnungsreihe 13 auf, wobei auf den Ablagebereich 16 kommissionierte Artikel 2 in Fördertaschen 15 der Hängefördertechnik 14 übergeführt werden und insbesondere in die Fördertaschen 15 rutschen. Hierdurch ist eine besonders einfache und zuverlässige Art der Überführung des kommissionierten Artikels 2 in die Fördertasche 15 erreicht.

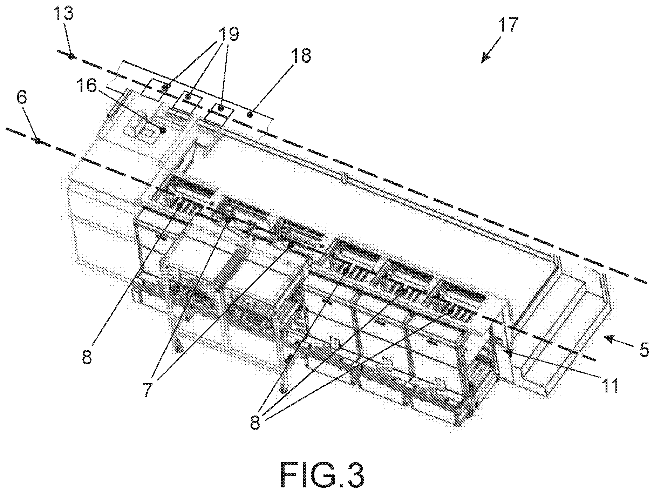

Figur 3 zeigt einen Kommissionierplatz 17 gemäß einem zweiten Ausführungsbeispiel der Erfindung mit einem Sorterband 18 mit Kippschalen 19 als erste Auftragsbehälterfördertechnik in einer Schrägansicht. Abgesehen von der Auftragsbehälterfördertechnik entspricht der Kommissionierplatz 17 dem anhand der Figuren 1 und 2 beschriebenen Kommissionierplatz 1. Die auf den Ablagebereich 16 kommissionierten Artikel 2 rutschen einzeln auf je ein Sorterglied 19, das durch eine Kippschale, einen Quergurt, eine Fallklappe oder ähnliches gebildet sein kann, und werden mit dem Sorterband 18 transportiert. Entlang des Sorterbands 18 sind in der Figur 3 nicht dargestellte Auftragsbehälter vorgesehen, in die die auf die Sorterglieder 19 kommissionierten Artikel 2 von einer Steuereinrichtung des Kommissionierplatzes 17 durch zeigerechtes Auslösen der Sorterglieder 19 übergeführt werden. Hierdurch ist der Vorteil erhalten, dass an dem Kommissionierplatz 17 je nach Art des Artikels 2 und des Auftrags entweder über die Sorterglieder 19 in Auftragsbehälter oder direkt in zweite Auftragsbehälter 9 in den Auftragsbehälterbuchten 8 kommissioniert werden kann.

Aufgrund der vielfältigen Möglichkeiten zur Kommissionierung an den Kommissionierplätzen 1 und 17 kann die Steuereinrichtung des Kommissionierplatzes 1 oder 17 dazu ausgebildet sein entweder in erste Auftragsbehälter oder in zweite Auftragsbehälter eine reine Auftragskommissionierung oder eine Batchkommissionierung durchzuführen. Da sich die Kommissionieraufträge der Geschäfte und Endkunden tageszeitabhängig ändern kann auf die aktuelle Auslastung der Fördertechniken und Kommissionierplätze eingegangen werden, um im gesamten Kommissioniersystem einen möglichst hohen Durchsatz an Kommissionieraufträgen zu erzielen.

Die Kommissionierperson kann auch durch einen Kommissionierroboter ersetzt werden, mit dem die Aufgaben der Kommissionierperson erledigt werden können. Solche Kommissionierroboter sind dem Fachmann seit längerem bekannt, weshalb hier nicht näher darauf eingegangen ist.

Es kann erwähnt werden, dass der Kommissionierplatz besonders vorteilhaft zur Verarbeitung von Retouren beziehungsweise retournierten Artikeln verwendet werden kann. Die Steuereinrichtung des Kommissionierplatzes erkennt Lagerbehälter, in denen dem Kommissionierplatz retournierte Artikel zugeführt werden, oder erhält eine entsprechende Information von der übergeordneten Steuereinrichtung des Kommissioniersystems. Als Retouren oder retournierte Artikel bezeichnet man Artikel, die bereits einmal als Auftrag kommissioniert wurden, vom Auftraggeber aber als nicht erwünscht wieder zurückgegeben oder geliefert wurden. Retouren können in Lagerbehältern wieder in das Artikellager eingelagert werden, bis diese für einen Kommissionierauftrag benötigt und wieder von dem Artikellager zu dem Kommissionierplatz ausgelagert werden. Besonders vorteilhaft ist es allerdings retournierte Artikel in einem Lagerbehälter dem Kommissionierplatz zuzuführen und zur Zwischenspeicherung an dem Kommissionierplatz in erste Auftragsbehälter und/oder zweite Auftragsbehälter zu kommissionieren. Hierbei können retournierte Artikel beispielsweise an dem Kommissionierplatz aus dem Lagerbehälter entnommen und in eine Fördertasche gelegt werden, die dann in einem Marix- oder Wurzelsorter als dynamischem Zwischenpuffer zwischengespeichert werden. Wenn so ein retournierter Artikel in der Fördertasche für einen Kommissionierauftrag benötigt wird, dann kann die Fördertasche mit dem retournierten Artikel zum Packplatz transportiert und der retournierte Artikel direkt bei dem Packplatz in den Auftragsbehälter gelegt werden oder die Fördertasche mit dem retournierten Artikel kann auch zu dem Kommissionierplatz transportiert werden und dort der retournierte Artikel in den Auftragsbehälter kommissioniert werden. Hierdurch ist eine besonders effiziente Verarbeitung von Retouren gegeben, ohne die Lagerbehälterfördertechnik und das Artikellager zu belasten.

Gemäß einem weiteren in den Figuren nicht dargestellten Ausführungsbeispiel der Erfindung wäre die erste Auftragsbehälterfördertechnik durch eine Hängefördertechnik gebildet, die allerdings im Vergleich zu der in der Figur 1 dargestellten Hängefördertechnik 14 um 90 Grad gedreht angeordnet ist. Die weitere Anordnungsreihe würde gemäß diesem Ausführungsbeispiel also im Wesentlichen senkrecht auf die Anordnungsreihe stehen. Die Hängefördertechnik würde Fördertaschen zu einem ebenfalls um 90 Grad verdrehten Ablagebereich transportieren und würde die Fördertaschen nach Befüllung mit kommissionierten Artikeln über der Lagerbehälterfördertechnik und der zweiten Auftragsbehälterfördertechnik weiter transportieren. Auch eine umgekehrte Transportrichtung der Hängefördertechnik oder eine Anordnung der Anordnungsreihe und der weiteren Anordnungsreihe in einem anderen Winkel von beispielsweise 45 Grad wäre möglich. Die Anordnung der weiteren Anordnungsreihe im Wesentlichen senkrecht oder schräg auf die Anordnungsreihe hat den Vorteil, dass größere Flexibilität gegeben ist, um den Kommissionierplatz platzsparend in das gesamte Kommissioniersystem einzubinden.

Es kann erwähnt werden, dass die Lagerbehälterfördertechnik und die zweite Auftragsbehälterfördertechnik im Rahmen dieser Erfindungsbeschreibung auch dann als in der Anordnungsreihe angeordnet zu verstehen sind, wenn diese Fördertechniken nur unwesentlich parallel zueinander versetzt angeordnet sind.

## Patentansprüche

1. Kommissionierplatz (1; 17) zum Kommissionieren von Artikeln (2) aus Lagerbehältern (3) in Auftragsbehälter (9, 15) nach dem Ware-zu-Person-Prinzip mit einer
Lagerbehälterfördertechnik (10) zum Transport von Artikeln (2) enthaltenden Lagerbehältern (3), insbesondere Kisten aus einem Lagerregal in zumindest zwei in einer Anordnungsreihe (6) angeordnete Lagerbehälterbuchten (7) des Kommissionierplatzes (1; 17) und mit einem
entlang der Anordnungsreihe (6) angeordneten Kommissionierbereich (5) für eine Kommissionierperson (4) oder einen Kommissionierroboter und mit einer in einer weiteren Anordnungsreihe (13) angeordneten ersten Auftragsbehälterfördertechnik (14; 18) zum Transport von ersten Auftragsbehältern (15; 18) zur Aufnahme von aus den Lagerbehältern (3) entnommenen Artikeln (2),
wobei eine zweite Auftragsbehälterfördertechnik (12) zum Transport von zweiten Auftragsbehältern (9), insbesondere Kisten zur Aufnahme von Artikeln (2) in ebenfalls in der Anordnungsreihe (6) angeordnete Auftragsbehälterbuchten (8) des Kommissionierplatzes (1; 17) vorgesehen ist, **dadurch gekennzeichnet, dass** die erste Auftragsbehälterfördertechnik (14; 18) durch ein Sorterband (18) mit Kippschalen (19) oder eine Hängefördertechnik (14) mit Fördertaschen (15) gebildet ist.

2. Kommissionierplatz (1) gemäß Anspruch 1, **dadurch gekennzeichnet, dass** die weitere Anordnungsreihe (13) entlang des Kommissionierbereichs (5) im Wesentlichen gegenüber der Anordnungsreihe (6) und somit die beiden Anordnungsreihen (6, 13) und der Kommissionierbereich (5) im Wesentlichen parallel zueinander vorgesehen sind.

3. Kommissionierplatz gemäß Anspruch 1, **dadurch gekennzeichnet, dass** die weitere Anordnungsreihe im Wesentlichen senkrecht zu dem im Wesentlichen parallel zueinander angeordneten Kommissionierbereich und Anordnungsreihe vorgesehen sind.

4. Kommissionierplatz (1) gemäß einem der vorstehenden Ansprüche, **dadurch gekennzeichnet, dass** bei einer durch eine Hängefördertechnik (14) gebildeten ersten Auftragsbehälterfördertechnik ein Ablagebereich (16) als Abschluss des Kommissionierbereichs (5) zwischen der Anordnungsreihe (6) und der weiteren Anordnungsreihe (13) vorgesehen ist, wobei auf den Ablagebereich (16) kommissionierte Artikel (2) in die Fördertaschen (15) der Hängefördertechnik (14) rutschen.

5. Kommissionierplatz (17) gemäß einem der Ansprüche 1 bis 3, **dadurch gekennzeichnet, dass** bei einer durch ein Sorterband (18) gebildeten ersten Auftragsbehälterfördertechnik ein Ablagebereich (16) als Abschluss des Kommissionierbereichs (5) zwischen der Anordnungsreihe (6) und der weiteren Anordnungsreihe (13) vorgesehen ist, wobei auf dem Ablagebereich (16) kommissionierte Artikel (2) in je eine Kippschale (19) des Sorterbandes (18) rutschen.

6. Kommissionierplatz (1; 17) gemäß einem der Ansprüche 1 bis 5, **dadurch gekennzeichnet, dass** eine Steuereinrichtung zur Vorgabe der durch die Kommissionierperson (4) oder den Kommissionierroboter zu kommissionierenden Artikel (2) vorgesehen ist, wobei Auftragsbehälter (15) der ersten Auftragsbehälterfördertechnik (14; 18) zur Batchkommissionierung und/oder zur Auftragskommissionierung und Auftragsbehälter (9) der zweiten Auftragsbehälterfördertechnik (12) ausschließlich zur Auftragskommissionierung genutzt werden.

7. Kommissionierplatz (1; 17) gemäß einem der Ansprüche 1 bis 5, **dadurch gekennzeichnet, dass** eine Steuereinrichtung zur Vorgabe der durch die Kommissionierperson (4) oder den Kommissionierroboter zu kommissionierenden Artikel (2) vorgesehen ist, wobei Auftragsbehälter (15) der ersten Auftragsbehälterfördertechnik (14; 18) ausschließlich zur Auftragskommissionierung und Auftragsbehälter (9) der zweiten Auftragsbehälterfördertechnik (12) zur Batchkommissionierung und/oder zur Auftragskommissionierung genutzt werden.

8. Kommissionierplatz (1; 17) gemäß einem der Ansprüche 1 bis 7, **dadurch gekennzeichnet, dass** die Lagerbehälterfördertechnik (10) in einer Ebene über der zweiten Auftragsbehälterfördertechnik (12) vorgesehen ist.

9. Kommissionierplatz (1; 17) gemäß Anspruch 8, **dadurch gekennzeichnet, dass** im Bereich der zumindest einen Auftragsbehälterbucht (8) über der zweiten Auftragsbehälterfördertechnik (12) und/oder im Bereich der zumindest einen Lagerbehälterbucht (7) über der Lagerbehälterfördertechnik (10) eine Behälterhebevorrichtung (11) vorgesehen ist, um Auftragsbehälter (9) und/oder Lagerbehälter (3) zur Kommissionierung in eine Arbeitshöhe des Kommissionierbereichs (5) zu heben beziehungsweise nach dem Kommissionieren wieder auf die zweite Auftragsbehälterfördertechnik (12) und/oder die Lagerbehälterfördertechnik (10) abzusenken.

10. Kommissionierplatz gemäß einem der vorstehenden Ansprüche, **dadurch gekennzeichnet, dass** eine Steuereinrichtung zur Steuerung der Verarbeitung von Retouren vorgesehen ist, wobei bereits einmal kommissionierte Artikel in einem Lagerbehälter dem Kommissionierplatz zugeführt und zur Zwischenspeicherung an dem Kommissionierplatz in erste Auftragsbehälter und/oder zweite Auftragsbehälter kommissioniert werden.

## Claims

1. A picking station (1; 17) for picking articles (2) from storage containers (3) into order containers (9, 15) according to the good-to-person-principle having a
storage container conveyor technique (10) for transporting storage containers (3) containing articles (2), in particular boxes, from a storage rack into at least two storage container bays (7), arranged in an arrangement row (6), of the picking station (1; 17) and having a
picking area (5) arranged along the arrangement row (6) for a picking person (4) or a picking robot and having a first order container conveyor technique (14; 18) arranged in a further arrangement row (13) for the transport of first order containers (15; 18) for receiving articles (2) retrieved from the storage containers (3),
wherein there is provided a second order container conveyor technique (12) for the transport of second order containers (9), in particular boxes, for receiving articles (2) into order container bays (8), also arranged in the arrangement row (6), of the picking station (1; 17),
**characterized in that**
the first order container conveyor technique (14; 18) is formed by a sorting belt (18) having tilting trays (19) or a suspension conveyor technique (14) having conveyor bags (15).

2. A picking station (1) according to claim 1, **characterized in that** the further arrangement row (13) along the picking area (5) is provided essentially opposite to the arrangement row (6) and that, in this way, the two arrangement rows (6, 13) and the picking area (5) are provided essentially in parallel to each other.

3. A picking station according to claim 1, **characterized in that** the further arrangement row is provided essentially vertically to the picking area and the arrangement row, which are arranged essentially in parallel to each other.

4. A picking station (1) according to any of the preceding claims, **characterized in that** in a first order container conveyor technique formed by a suspension conveyor technique (14) there is provided a depositing area (16) as an end of the picking area (5) between the arrangement row (6) and the further arrangement row (13), wherein articles (2) picked onto the depositing area (16) slide into the conveyor bags (15) of the suspension conveyor technique (14).

5. A picking station (17) according to any of claims 1 to 3, **characterized in that** in a first order container conveyor technique formed by a sorting belt (18) there is provided a depositing area (16) as an end of the picking area (5) between the arrangement row (6) and the further arrangement row (13), wherein articles (2) picked onto the depositing area (16) slide into respectively one tilting tray (19) of the sorting belt (18).

6. A picking station (1; 17) according to any of claims 1 to 5, **characterized in that** there is provided a controlling device for predetermining the article (2) to be picked by the picking person (4) or the picking robot, wherein order containers (15) of the first order container conveyor technique (14; 18) are used for batch picking and/or order picking and wherein order containers (9) of the second order container conveyor technique (12) are exclusively used for batch picking.

7. A picking station (1; 17) according to any of claims 1 to 5, **characterized in that** there is provided a controlling device for predetermining the articles (2) to be picked by the picking person (4) or the picking robot, wherein the order containers (15) of the first order container conveyor technique (14; 18) are exclusively used for order picking and wherein order containers (9) of the second order container conveyor technique (12) are used for batch picking and/or order picking.

8. A picking station (1; 17) according to any of claims 1 to 7, **characterized in that** the storage container conveyor technique (10) is provided on a level above the second order container conveyor technique (12).

9. A picking station (1; 17) according to claim 8, **characterized in that** there is provided in the area of the at least one order container bay (8) above the second order container conveyor technique (12) and/or in the area of the at least one storage container bay (7) above the storage container conveyor technique (10) a container lifting device (11) in order to lift order containers (9) and/or storage containers (3) up to a working height of the picking area (5) for picking or to drop onto the second order container conveyor technique (12) and/or the storage container conveyor technique (10) after picking, respectively.

10. A picking station according to any of the preceding claims, **characterized in that** there is provided a controlling device for controlling the processing of retour goods, wherein articles already picked once are supplied to the picking station in a storage container and picked for temporary storage at the picking station into first order containers and/or second order containers.

## Revendications

1. Poste de préparation de marchandises pour l'expédition (1; 17) servant à préparer des articles (2) à partir de contenants de stockage (3) dans des contenants de commande (9, 15) selon le principe "une marchandise pour une personne" avec
- un mécanisme de transport de contenants de stockage (10) pour le transport de contenants de stockage (3), en particulier de caisses, contenant des articles (2), depuis un rayonnage de stockage dans au moins deux auges pour contenants de stockage (7) disposées en un agencement en série (6) du poste de préparation de marchandises (1; 17), et avec
- une zone de préparation de marchandises (5) disposée le long de l'agencement en série (6) pour une personne de préparation de marchandises (4) ou un robot de préparation de marchandises, et avec
- un premier mécanisme de transport de contenants de commande (14; 18) disposé en un autre agencement en série (13) pour le transport de premiers contenants de commande (15; 18) destinés à recevoir des articles (2) prélevés hors des contenants de stockage (3),
- dans lequel il est prévu un second mécanisme de transport de contenants de commande (12) pour le transport de seconds contenants de commande (9), en particulier de caisses, destinés à recevoir des articles (2) dans des auges pour contenants de commande (8) également disposées dans l'agencement en série (6) du poste de préparation de marchandises (1; 17),
**caractérisé en ce que** le premier mécanisme de transport de contenants de commande (14; 18) est formé par une bande de triage (18) avec des coques basculantes (19) ou par un mécanisme de transport suspendu (14) avec des poches de manutention (15).

2. Poste de préparation de marchandises pour l'expédition (1) selon la revendication 1, **caractérisé en ce que** l'autre agencement en série (13) est prévu le long de la zone de préparation de marchandises (5) essentiellement en face de l'agencement en série (6) et les deux agencements en série (6, 13) et la zone de préparation de marchandises (5) sont ainsi prévus essentiellement parallèlement l'un à l'autre.

3. Poste de préparation de marchandises pour l'expédition selon la revendication 1, **caractérisé en ce que** l'autre agencement en série est prévu essentiellement perpendiculairement à la zone de préparation de marchandises et à l'agencement en série prévus essentiellement parallèlement l'un à l'autre.

4. Poste de préparation de marchandises pour l'expédition (1) selon l'une quelconque des revendications précédentes, **caractérisé en ce qu'**il est prévu dans un premier mécanisme de transport de contenants de commande formé par un mécanisme de transport suspendu (14) une zone de dépôt (16) comme clôture de la zone de préparation de marchandises (5) entre l'agencement en série (6) et l'autre agencement en série (13), dans lequel des articles (2) préparés sur la zone de dépôt (16) glissent dans les poches de manutention (15) du mécanisme de transport suspendu (14).

5. Poste de préparation de marchandises pour l'expédition (17) selon l'une quelconque des revendications 1 à 3, **caractérisé en ce qu'**il est prévu dans un premier mécanisme de transport de contenants de commande formé par une bande de triage (18) une zone de dépôt (16) comme clôture de la zone de préparation de marchandises (5) entre l'agencement en série (6) et l'autre agencement en série (13), dans lequel des articles (2) préparés sur la zone de dépôt (16) glissent chacun dans une coque basculante (19) de la bande de triage (18).

6. Poste de préparation de marchandises pour l'expédition (1; 17) selon l'une quelconque des revendications 1 à 5, **caractérisé en ce qu'**il est prévu un dispositif de commande pour la désignation des articles (2) à préparer par la personne de préparation (4) ou par le robot de préparation, dans lequel on utilise des contenants de commande (15) du premier mécanisme de transport de contenants de commande (14; 18) pour la préparation de lots et/ou pour la préparation de commandes et des contenants de commande (9) du second mécanisme de transport de contenants de commande (12) exclusivement pour la préparation de commandes.

7. Poste de préparation de marchandises pour l'expédition (1; 17) selon l'une quelconque des revendications 1 à 5, **caractérisé en ce qu'**il est prévu un dispositif de commande pour la désignation des articles (2) à préparer par la personne de préparation (4) ou par le robot de préparation, dans lequel on utilise des contenants de commande (15) du premier mécanisme de transport de contenants de commande (14; 18) exclusivement pour la préparation de commandes et des contenants de commande (9) du second mécanisme de transport de contenants de commande (12) pour la préparation de lots et/ou pour la préparation de commandes.

8. Poste de préparation de marchandises pour l'expédition (1; 17) selon l'une quelconque des revendications 1 à 7, **caractérisé en ce que** le mécanisme de transport de contenants de stockage (10) est prévu dans un plan situé au-dessus du second mécanisme de transport de contenants de commande (12).

9. Poste de préparation de marchandises pour l'expédition (1; 17) selon la revendication 8, **caractérisé en ce qu'**il est prévu dans la région de ladite au moins une auge pour contenant de commande (8) au-dessus du second mécanisme de transport de contenants de commande (12) et/ou dans la région de ladite au moins une auge pour contenant de stockage (7) au-dessus du mécanisme de transport de contenants de stockage (10) un dispositif de levage des contenants (11), afin de soulever des contenants de commande (9) et/ou des contenants de stockage (3) à une hauteur de travail de la zone de préparation de marchandises (5) pour la préparation de marchandises ou de les abaisser de nouveau sur le second mécanisme de transport de contenants de commande (12) et/ou sur le mécanisme de transport de contenants de stockage (10) après la préparation de marchandises.

10. Poste de préparation de marchandises pour l'expédition selon l'une quelconque des revendications précédentes, **caractérisé en ce qu'**il est prévu un dispositif de commande pour la commande du traitement de retours, dans lequel des articles déjà préparés une fois sont envoyés dans un contenant de stockage au poste de préparation de marchandises pour l'expédition et sont préparés pour le stockage intermédiaire au poste de préparation de marchandises pour l'expédition dans des premiers contenants de commande et/ou dans des seconds contenants de commande.
